# EUROPEAN PATENT SPECIFICATION

(11) **EP 1 258 188 B1**
(45) Date of publication and mention of the grant of the patent: **05.04.2006**
(21) Application number: 02076875.0
(22) Date of filing: 14.05.2002
(51) Int. Cl.: A01G 5/00, B65D 85/50

(54) **Container for cut flowers**
Behälter für Schnittblumen
Conteneur pour fleurs coupées

(30) Priority: 14.05.2001 NL 1018066; 19.07.2001 NL 1018581
(43) Date of publication of application: 20.11.2002
(73) Proprietor: Altech Logistiek B.V., 2671 CT Naaldwijk (NL)
(72) Inventor: Verschoor, Cornelis Jacob, c/o Altech Logistiek BV, 2671 CT Naaldwijk (NL)
(74) Representative: Ferguson, Alexander

(56) References cited:
- NL-C- 1 006 029
- NL-C- 1 009 000
- PATENT ABSTRACTS OF JAPAN vol. 1997, no. 11, 28 November 1997 (1997-11-28) -& JP 09 188373 A (DAIICHI JITSUGYO:KK), 22 July 1997 (1997-07-22)

## Description

The invention relates to a container for conveying cut flowers after picking to a further processing station.

It is known to hang long-stemmed flowers, such as roses, after picking in strip-shaped, comb-shaped flower holders provided with a series of slits at the picking location, the full flower holders being accommodated in a container, that can be moved along to central place of collection on wheels or suspended from a tube rails, in order to be transported from there with other filled containers on a car to a sorting machine. Such a system, as described in the preamble of claim 1, is described in applicants Dutch patent 1006029.

In the known system a flower holder is suspended in the container, flowers are placed in its slits, and subsequently an empty next flower holder is taken and placed in the container, the first flower holder being moved on Both flower holders are coupled to each other then, the flowers in the consecutive flower holders being enclosed all around in the edge of the slit in question and an edge of the next flower holder.

The container, either in a group or not, is transported to a sorting machine, where the containers via a buffer station are offered to a transfer device, where the flower holders are slid out of the container one by one by means of a sliding means. By means of a singling device the -uncoupled- flower holders are separated from each other and consecutively transferred to a circulating dosing device for the sorting machine. A separator that is not further described has been provided here for separating the stems of flowers held in consecutive flower holders.

A drawback of the known system is that during filling the picker has to place the flower holders, and that place has to be available for keeping - sufficient- flower holders available during picking.

A further drawback is that means are necessary for separating the flower holders from each other, transferring them onto the sorting machine and returning the flower holders after sorting.

It is an object of the invention to improve on at least one of these restrictions.

From one aspect the invention provides a container for cut flowers, as described in claim 1.

The flower holders are attached to the container and therefore follow it. A fixed, predetermined number of flower holders is always present in each container, as a result of which the degree of filling can each time be optimal and cannot be disrupted by a flower holder missing as a result of loss or failure in the conveyance cycle of the flower holders.

Preferably the connecting means comprises a chain, band or belt or the like. Thus the flower holders in the container can simply be moved as a group, particularly by driving the chain, etcetera.

Preferably the connecting means forms a flat circulation, having a lower track and an upper track. In the one track the empty flower holders can be positioned and in the other track, preferably the lower track, the filled flower holders.

Preferably the flower holders form a group having a common length of either the upper track or the lower track. In empty condition the group of flower holders may then as a whole be at the one track and in filled condition as a whole be at the other track. During change from the one to the other track, or the other way round, respectively, filling or emptying can take place.

It is preferred here that the connecting means is drivable, particularly drivable in two opposite directions, so that a complete circulation of the connecting means is not necessary, and a reversal at the end of the circulation can be sufficed with, in two directions.

Preferably the container is provided with first drive means for the connecting means, to which external second drive means that can be operated can be coupled. The drive can thus be divided and need not be complete until the moment that drive is actually wanted. The second drive means can thus be available for several containers. The containers can be kept without protrusions worth mentioning for drive means, and therefore be placed closer together during conveyance to a sorting machine. The first connecting means can here be arranged within the profile of the container.

It is preferred here that the first drive means comprise a shaft, provided with means for drivingly engaging the connecting means, which shaft has an end provided with first coupling means, and the second drive means being provided with second coupling means, that can be coupled to the first coupling means for transmission of the driving.

In an embodiment the second drive means may comprise a motor so that the picker or labourer has his hands largely free for handling the flowers. In another embodiment the second drive means may comprise a handle, which embodiment is cheap.

Preferably the flower holders are attached such to the connecting means that the series of slits are situated at vertical distance from the connecting means, outside the circulation. Thus there is more room for placing the flowers and removing them. Moreover the height of the circulation can be kept small because the length of the flower (bud) has no influence.

It is preferred that the connecting means extends up to the input side and that a reversal space is free at the input side for the flower holders in the circulation movement there. In the reversal space the flowers can be placed in the flower holders. However, this offers the opportunity to use, the open space and to keep the container itself small, the reversal space being situated at least partially, preferably largely, outside of the container.

For keeping the stems of flowers in consecutive flower holders separated it is provided that the flower holders are provided with a stem stop at a distance below the series of slits. In that way a stem separating means is already provided as a result of which the chance of stems getting entangled with each other is reduced. This means goes together with the flower holders and as a result is not prone to failure.

Preferably the flower holders are provided with a confining means for closing the series of slits of an adjacent flower holder, so that the flowers are always confined all around.

Preferably the connecting means are part of a carousel.

From another aspect the invention provides a container for cut flowers, comprising a housing having means for supporting a number of flower holders, which flower holders are provided with a series of slits that are open at one end for supporting the flowers near the bud, the container having an input side for inserting the flowers from the outside, the container being provided with drive means for moving the flower holders over or along the supporting means from the input side to a position within the housing.

The user has to pay less attention to the movement of the flower holders in the container, so that the picking and placing process can take place quicker. It is preferred here that the flower holders are attached to a carousel that is driven by the drive means.

The invention will be elucidated on the basis of the exemplary embodiment shown in the attached drawings, in which;
Figures 1 A-C show a side view, front view and top view, respectively, of an exemplary embodiment of a container according to the invention;
Figures 2A-C show a side view, end view and top view, respectively, of a flower holder for the container of figures 1A-C; and
Figure 3 shows a detail at the input side of the container of the preceding figures, in operation.

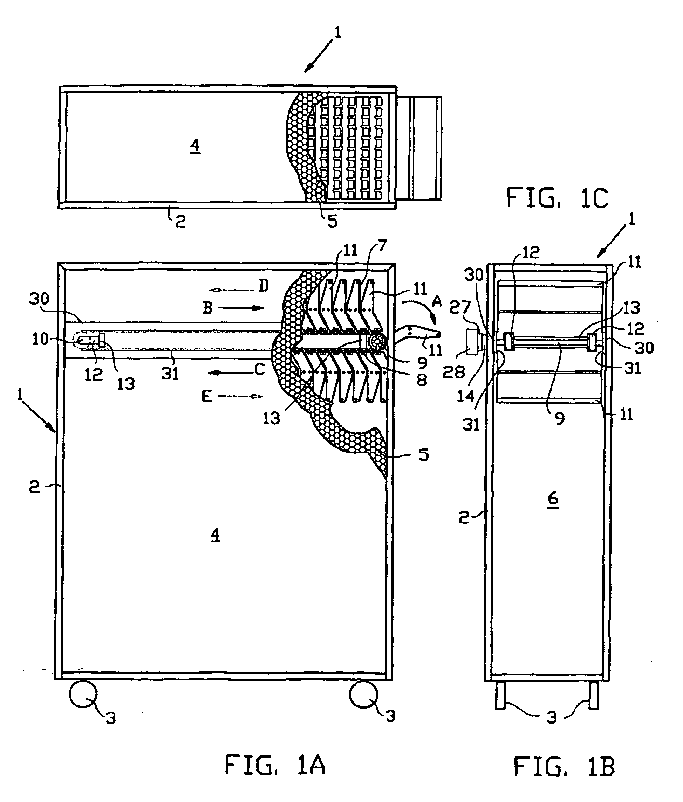

The container 1 comprises a housing 2 reinforced with a frame, the housing being supported on wheels 3, and screened by means of plates 4 on the walls, the upper wall and left end wall as seen in figure 1 A. Said walls can be double-walled and enclose insulation material 5 in them.

In the upper part of the housing 2 a frame 30 with side support profiles 31 and transverse rods 13 has been attached. On each transverse rod 13 two bearings 12 have been arranged for bearing the shafts 9 and 10, respectively.

The synthetic side support profiles 31 each offer support to endless chains 8, that circulate about the shafts 9 and 10 and on which a group of flower holders 11 is attached. The group 7 of flower holders 11 has a common length corresponding to the depth of the housing 2, considered in horizontal direction.

At their ends the shafts 9 and 10 have been provided with means that are not further shown for engaging the chain 8 in order to let it circulate smoothly. In this example the shaft 9 is provided with a coupling piece 14 at one end, on which coupling piece 14 a coupling piece 27 of an electro motor 28 can be coupled, after which the motor 28 ensures rotation of the shaft 9 in the one or the other direction.

In figures 1 A-C it can furthermore be seen that the in figure 1 A left-hand side of the housing 2 forms an opening 6. Said opening 6 forms the input side of the container 1.

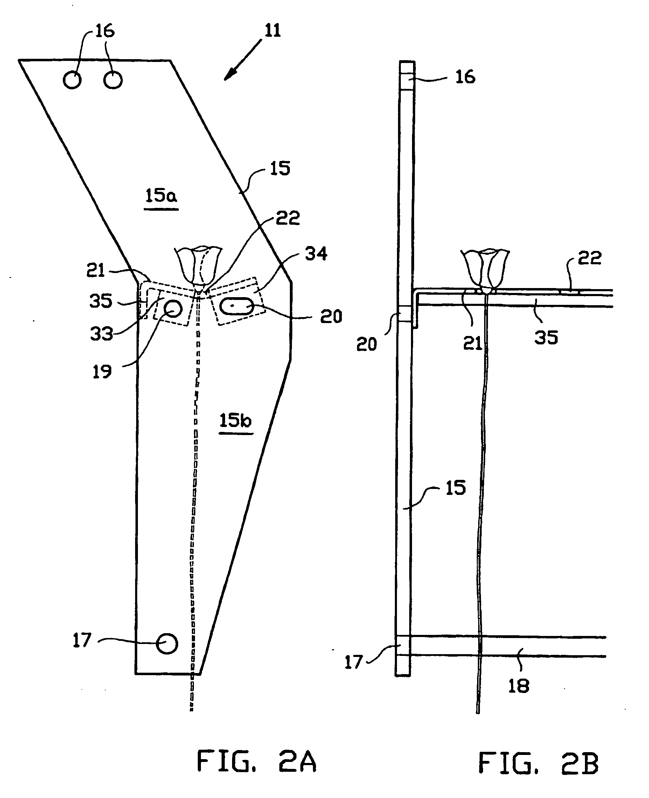

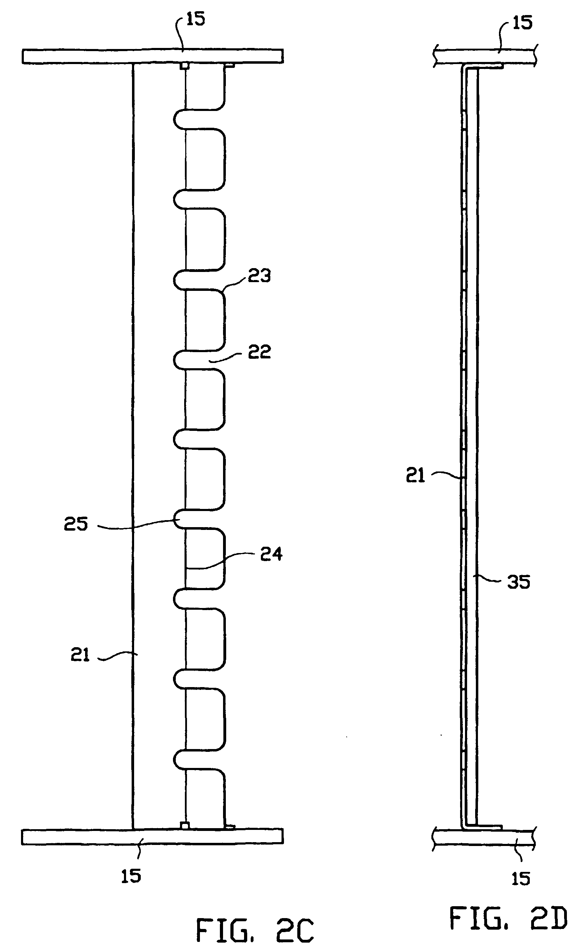

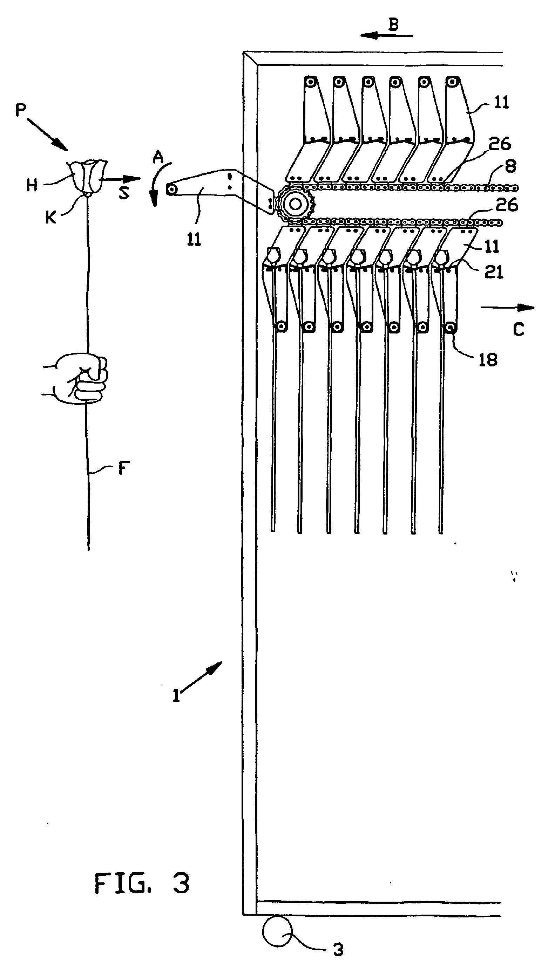

The flower holders 11, further shown in the figures 2A-C, substantially consist of two more or less boomerang-shaped side plates 1 5, which at the upper side are provided with two attachment holes 16 by which they can be attached to a connecting piece 26 (see figure 3) on the chain 8. At the lower end the side plates 15 have been provided with a hole 17, for accommodation therein of a transverse rod 18.

Halfway, the side plates 15 are provided with attachments holes 19 and 20, for attachment of turned down end lips 33 and 34 at both ends of a support plate 21 which, as can be seen in figure 2C, is provided with a series of finite slits 22 that are provided with rounded pilot openings 23. The support plate 21 is buckled in the centre of 25, in order to define a stable -hollow- support location for a bud. The support plate 21 has further been downwardly turned in longitudinal strip 35 at the side facing away from the slits 22. The longitudinal strip 35 reinforces the plate 21 and moreover forms a stop that does not damage the flowers, for flowers that have been accommodated in the support plate 21 of an adjacent flower holder.

In operation, shown in figure 3, the labourer or picker manually brings a flower P with flower head H and bud or thickening K and long stem F to the container in the direction S.

With the other hand the picker is able to reach through the open input end 6 of the container 1, to grab a transverse rod 18 of the front flower holder 11 in the upper row and to turn it in the direction A to the front and downwards. When the flower holder 11 has been sufficiently turned downwards and the slits 22 can easily be reached for the other hand of the picker, he brings the flower P with the bud K just above the slit 22 in the flower holder 11, after which he lets go of the flower P so that the flower with the bud K rests on the slit boundaries. The mutual distance between the flower holders 11, particularly the mutual distance between the connection pieces 26, is such that the next flower holder 11, which automatically moves along, does not hamper the working space of the picker.

During moving the flower holder 11 the chain 8 will rotate along, as a result of which the flower holders 11 that are already at the upper track or at the lower track, respectively, shift in the direction B or C, respectively. In this example of figure 3 there are eleven flower holders 11, each having nine slits, so that ninety-nine flowers can be accommodated in the container 1. The transverse rods 18 ensure mutual separation of the stems of flowers accommodated in adjacent flower holders 11. Considered in horizontal direction, the transverse rods 11 lie just next to the end of the slits 22.

Instead of direct manual operation, use of a handle may also be provided, which handle can be coupled on the coupling piece 14 or something similar for that purpose. Use could also be made of the motor 28 to which end a suitable operation means for the picker will be present when filling the container 1, for instance a remote control.

When the container 1 is moved to a location of delivery of flowers to a further processing unit, the chain 8 can be driven in opposite direction (D and E in figure 1 A), to successively offer the flower holders 11 to a remover or removing device, the flowers P then being taken out again at the input side 6. The flower holders then move step by step from the lower track to the upper track, in which condition they can be conveyed again to the location of picking with the container 1, after which the entire process can start anew.

## Claims

1. Container (1) for cut flowers, comprising a housing (2) having means for supporting a number of flower holders (11), which flower holders are provided with a series of slits (22) that are open at one end for supporting the flowers near the bud, the container (1) having an input side for inserting the flowers from the outside, **characterized in that** the flower holders (11) are attached to a connecting means (8) circulating in the housing (2) with which the flower holders are movable between at least the input side and a line-up location within the housing.

2. Container according to claim 1, the connecting means (8) comprising a chain, band or belt or the like.

3. Container according to claim 1 or 2, the connecting means (8) arming a flat circulation, having a lower track and an upper track, the flower holders (11) preferably forming a group having a common length of either the upper track or the lower track.

4. Container according to any one of the preceding claims, the connecting means (8) being drivable, preferably in two opposite directions.

5. Container according to claim 4, the container (1) being provided with first drive means (9,28) for the connecting means (8), to which external second drive means that can be operated can be coupled.

6. Container according to claim 5, the first drive means comprising a shaft (9), provided with means for drivingly engaging the connecting means (8), which shaft has an end provided with first coupling means (14), and the second drive means being provided with second coupling means (27), that can be coupled to the first coupling means for transmission of the driving, the second drive means preferably comprising a motor or a handle.

7. Container according to any one of the preceding claims, the flower holders (11) being attached such to the connecting means (8) that the series of slits (22) are situated at vertical distance from the connecting means, outside the circulation.

8. Container according to claim 7, the connecting means (8) extending up to the input side and a reversal space being free at the input side for the flowers in the circulation movement there, the reversal space being situated preferably at least partially, preferably largely outside of the container.

9. Container according to any one of the preceding claims, the flower holders (11) geing provided with a stem stop (18) at a distance below the series of slits (22).

10. Container according to any one of the preceding claims, the flower holders (11) being provided with a confining means (21, 35) for closing the series of slits (22) of the adjacent flower holder.

11. Container according to any one of the preceding claims, the connecting means (8) being part of a carousel.

## Patentansprüche

1. Behälter (1) für Schnittblumen, umfassend ein Gehäuse (2) mit Mitteln zum Stützen einer Anzahl von Blumenhaltern (11), welche Blumenhalter mit einer Schlitzenserie (22), welche Schlitzen zum Stützen der Blumen nahe der Blütenknospe an einem Ende offen sind, versehen sind, wobei der Behälter (1) eine Einführungsseite hat zum von außen Einführen der Blumen, **dadurch gekennzeichnet, daß** die Blumenhalter (11) auf einem im Gehäuse (2) umlaufenden Verbindungsmittel (8) befestigt sind, mit dem die Blumenhalter zwischen zumindest der Einführungsseite und einer Aufstellungstelle innerhalb dem Gehäuse versetzbar sind.

2. Behälter nach Anspruch 1, wobei das Verbindungsmittel (8) eine Kette, ein Band oder einen Riemen oder etwas derartiges umfaßt.

3. Behälter nach Anspruch 1 oder 2, wobei das Verbindungsmittel (8) einen flachen Umlauf bildet, mit einer Unterstrecke und einer Oberstrecke, wobei die Blumenhalter (11) vorzugsweise eine Gruppe, mit einer Gesamtlänge von entweder der Oberstrecke oder der Unterstrecke, bilden.

4. Behälter nach irgendeinem der vorhergehenden Ansprüche, wobei das Verbindungsmittel (8) anzutreiben ist, vorzugsweise in zwei entgegengesetzten Richtungen.

5. Behälter nach Anspruch 4, wobei der Behälter (1) mit ersten Antriebsmitteln (9,28) für das Verbindungsmittel (8) versehen ist, worauf externe zweite Antriebsmittel, die bedient werden können, gekuppelt werden können.

6. Behälter nach Anspruch 5, wobei die ersten Antriebsmittel eine Achse (9) umfassen, mit Mitteln zum treibend Angreifen des Verbindungsmittels (8) versehen, welche Achse ein mit ersten Kupplungsmitteln (14) versehenes Ende hat, und wobei die zweiten Antriebsmittel mit zweiten Kupplungs mitteln (27) versehen sind, die mit den ersten Kupplungsmitteln zur Übertragung des Antriebs gekuppelt werden können, wobei die zweiten Antriebsmittel vorzugsweise einen Motor oder eine Kurbel umfassen.

7. Behälter nach irgendeinem der vorhergehenden Ansprüche, wobei die Blumenhalter (11) derartig am Verbindungsmittel (8) befestigt sind, daß die Schlitzenserie (22) auf vertikalem Abstand vom Verbindungsmittel, außer dem Umlauf, gelegen sind.

8. Behälter nach Anspruch 7, wobei das Verbindungsmittel (8) sich bis an die Einfuhrseite erstreckt und an der Einfuhrseite ein Umkehrraum für die Blumenhalter in der Umlaufbewegung da frei ist, wobei der Umkehrraum vorzugsweise zumindest teilweise, vorzugsweise großenteils, außer dem Behälter gelegen ist.

9. Behälter nach irgendeinem der vorhergehenden Ansprüche, wobei die Blumenhalter (11) auf einem Abstand unter der Schlitzenserie (22) mit einem Stielanschlag (18) versehen sind.

10. Behälter nach irgendeinem der vorhergehenden Ansprüche, wobei die Blumenhalter (11) mit einem Einschlußmittel (21,35) versehen sind, zum Schließen der Schlitzenserie (22) des nächstliegenden Blumenhalters.

11. Behälter nach irgendeinem der vorhergehenden Ansprüche, wobei die Verbindungsmittel (8) zu einem Karussel gehören.

## Revendications

1. Conteneur (1) pour fleurs coupées, comprenant un boîtier (2) doté de moyens pour supporter un certain nombre de supports (11) de fleurs, lesquels supports de fleur sont prévus avec une série de fentes (22) qui sont ouvertes au niveau d'une extrémité pour supporter les fleurs près du bouton, le conteneur (1) ayant un côté d'entrée pour insérer les fleurs depuis l'extérieur, **caractérisé en ce que** les supports (11) de fleur sont fixés sur des moyens de raccordement (8) circulant dans le boîtier (2) avec lesquels les supports de fleur sont mobiles entre au moins le côté d'entrée et un emplacement en rangée dans le boîtier.

2. Conteneur selon la revendication 1, les moyens de raccordement (8) comprenant une chaîne, une bande ou une courroie ou similaire.

3. Conteneur selon la revendication 1 ou 2, les moyens de raccordement (8) formant une circulation plate, ayant une voie inférieure et une voie supérieure, les supports (11) de fleur formant de préférence un groupe ayant une longueur commune de la voie supérieure ou de la voie inférieure.

4. Conteneur selon l'une quelconque des revendications précédentes, les moyens de raccordement (8) pouvant être entraînés, de préférence dans deux directions opposées.

5. Conteneur selon la revendication 4, le conteneur (1) étant prévu avec des premiers moyens d'entraînement (9, 20) pour les moyens de raccordement (8), auxquels on peut coupler des seconds moyens d'entraînement externes qui peuvent être actionnés.

6. Conteneur selon la revendication 5, les premiers moyens d'entraînement comprenant un arbre (2) prévu avec des moyens pour mettre en prise par entraînement les moyens de raccordement (8), lequel arbre a une extrémité prévue avec des premiers moyens de couplage (16) et les seconds moyens d'entraînement étant prévus avec des seconds moyens de couplage (17), qui peuvent être couplés aux premiers moyens de couplage pour la transmission de l'entraînement, les seconds moyens d'entraînement comprenant de préférence un moteur ou une poignée.

7. Conteneur selon l'une quelconque des revendications précédentes, les supports (11) de fleurs étant fixés sur de tels moyens de raccordement (8) de sorte que les séries de fentes (22) sont situées à une distance verticale des moyens de raccordement, hors de la circulation.

8. Conteneur selon la revendication 7, les moyens de raccordement (8) s'étendant jusqu'au côté d'entrée et un espace inversible étant libre au niveau du côté d'entrée pour les fleurs dans le mouvement de circulation, l'espace inversible étant situé de préférence au moins partiellement, de préférence largement à l'extérieur du conteneur.

9. Conteneur selon l'une quelconque des revendications précédentes, les supports (11) de fleur étant prévus avec une butée (20) de tige à une certaine distance au dessous de la série de fentes (22).

10. Conteneur selon l'une quelconque des revendications précédentes, les supports (11) de fleur étant prévus avec des moyens de confinement (21, 35) pour fermer la série de fentes (22) du support de fleur adjacent.

11. Conteneur selon l'une quelconque des revendications précédentes, les moyens de raccordement (8) faisant partie d'un carrousel.
